# NEUE EUROPÄISCHE PATENTSCHRIFT

(11) **EP 2 048 097 B2**
(45) Veröffentlichungstag und Bekanntmachung des Hinweises auf die Entscheidung über den Einspruch: **07.12.2016**
(45) Hinweis auf die Patenterteilung: 04.05.2011
(21) Anmeldenummer: 08165966.6
(22) Anmeldetag: 07.10.2008
(51) Int. Cl.: B65G 47/14, B29C 49/42

(54) **Vorrichtung zum Sortieren von Vorformlingen**
Pre-form sorting apparatus
Dispositif destiné à trier des préformes

(30) Priorität: 11.10.2007 DE 102007049009
(43) Veröffentlichungstag der Anmeldung: 15.04.2009
(73) Patentinhaber: Krones AG, 93073 Neutraubling (DE)
(72) Erfinder: Stoiber, Christian, 93185 Michelsneukirchen (DE); Blochmann, Erik, 93073 Neutraubling (DE); Brunner, Andreas, 93089 Aufhausen (DE); Fleischmann, Hans-Jürgen, 92449 Steinberg am See (DE); Kirsch, Peter, 93152 Schönhofen (DE); Rössler, Werner, 93087 Alteglofsheim (DE); Deyerl, Heinrich, 92552 Teunz (DE); Geltinger, Florian, 84088 Neufahrn (DE)
(74) Vertreter: Bittner, Bernhard

(56) Entgegenhaltungen:
- EP-A- 1 592 630
- EP-A- 1 650 143
- EP-A- 1 690 813
- EP-A- 1 921 028
- WO-A-2005/061352
- WO-A1-2006/084831
- DE-A1-102005 048 126
- DE-U1- 20 212 930
- GB-A- 1 118 952
- JP-A- 1 111 643

## Beschreibung

Die vorliegende Erfindung bezieht sich auf eine Vorrichtung und ein Verfahren zum Sortieren von Vorformlingen gemäss dem Oberbegriff der Ansprüche 1 und 15. Es wird jedoch darauf hingewiesen, dass die erfindungsgemäße Vorrichtung und das erfindungsgemäße Verfahren auch zum Sortieren anderer Körper und insbesondere anderer lang gestreckter Körper mit einem Außenprofil geeignet sind.

Die erwähnten Vorformlinge werden im Stand der Technik in der Getränkeherstellung verwendet, um später zu Getränkebehältnissen expandiert zu werden. Dabei ist es üblich, dass diese Behältnisse zunächst ungeordnet auf eine Sortiereinrichtung gelangen und in dieser Sortiereinrichtung in vorgegebener Weise ausgerichtet werden, um anschließend sortiert eine weitere Anlage, wie eine Blasmaschine, zu erreichen.

GB-A-1 118 952 zeigt eine Vorrichtung zur Entwirrung und Orientierung von Ventilbaugruppen in der Form von Nägeln, welche in einen Spalt einsortiert werden, der zwischen dem Zylinderboden und einer schräg nach unten zum Zylinderboden abfallenden Innenwand eines zylindrischen Körpers gebildet ist. In dem Spalt falsch liegende Ventilbaugruppen werden mittels Luftdüsen gewendet. Eine erste Führungsschiene, die oberhalb der Aufnahmefläche des unsortierten Stückguts angebracht ist, ist jedoch nicht beschrieben.

Aus der EP 1 592 630 B1 ist eine Ausrichtungsvorrichtung für Flaschenvorformen zur Hindurchführung durch eine Blasmaschine bekannt. Dabei ist eine bewegliche geneigte Einrichtung vorgesehen, die eine Vielzahl von Zellen aufweist, die dafür bestimmt sind, jeweils einen Vorformling in liegender Position aufzunehmen. Die so in liegender Stellung aufgenommenen Vorformlinge werden in einen Führungsschlitz weitergegeben, in welchem sie durch die besondere Ausgestaltung dieses Schlitzes gedreht und anschießend in dieser gedrehten Stellung weitergereicht werden.

Aus der EP 1 690 813 A1 sind eine Vorrichtung und ein Verfahren zum Gleichrichten von länglichen, vorzugsweise zylindrischen, Gegenständen mit einer Profilkontur bekannt. Bei dieser Vorrichtung werden die Vorformlinge auf eine drehende Scheibe aufgebracht, durch die Zentrifugalkraft nach außen gedrängt und schließlich in einer Führungsrinne geführt. Auch werden bei dieser Vorrichtung die Vorformlinge um ihre Längsachse gedreht bzw. gekippt. Vor einem Kippen findet ein Ausscheiden solcher Formlinge statt, welche nicht in einer gewissen Sollposition gegenüber der Führungsschiene angeordnet sind. Um die Effizienz dieser Vorrichtung zu erhöhen, ist ein erstes Leitelement vorgesehen, wobei zwischen diesem Leitelement und der drehenden Scheibe ein Spalt gelassen ist, der den Grundkörper der Vorformlinge passieren lässt, nicht jedoch den jeweiligen Stützkragen dieser Vorformlinge. Daneben ist ein radial bezüglich des Leitelementes innen angeordnetes Zusatzelement vorgesehen, welches eine Vororientierung der Vorformlinge bewirkt.

Aus der DE 10 2005 048 126 A1 sind ein Verfahren und eine Vorrichtung zum Sortieren von Vorformlingen bekannt. Dabei werden die Vorformlinge zur Sortierung einem drehbeweglichen Rotor zugeführt, der die Vorformlinge durch Einwirkung der Zentrifugalkraft entlang einer ortsfesten Führungsschiene positioniert, wobei am Außenumfang dieses Rotors eine Vereinzelung der Vorformlinge durchgeführt wird.

Der vorliegenden Erfindung liegt die Aufgabe zugrunde, eine Vorrichtung zum Sortieren von Vorformlingen zur Verfügung zu stellen, die eine gegenüber dem Stand der Technik höhere Arbeitsgeschwindigkeit ermöglicht. Dies wird durch eine Vorrichtung nach Anspruch 1, eine Anlage nach Anspruch 12 und ein Verfahren nach Anspruch 15 erreicht. Vorteilhafte Ausführungsformen und Weiterbildungen sind Gegenstand der Unteransprüche.

Eine erfindungsgemäße Vorrichtung zum Sortieren von Stückgut und insbesondere von Vorformlingen weist eine um eine vorgegebene Drehachse drehbare Aufnahmefläche zur Aufnahme des Stückguts auf. Weiterhin ist eine erste Führungsschiene zur Führung des Stückguts vorgesehen, wobei die erste Führungsschiene oberhalb der Aufnahmefläche angeordnet ist und zu der Aufnahmefläche einen Spalt bildet, durch den ein Bereich des Stückguts hindurchtritt und durch den ein weiterer Bereich des Stückguts gehalten wird. Weiterhin ist eine Wendeeinrichtung vorgesehen, welche das Stückgut bezüglich einer Längsrichtung des Stückguts schwenkt. Schließlich ist eine Ausscheideeinrichtung vorgesehen, welche einen Teil des sortierten Stückguts ausscheidet. Erfindungsgemäß ist die Wendeeinrichtung in der Bewegungseinrichtung des Stückguts stromaufwärts bezüglich der Ausscheideeinrichtung angeordnet. Das heißt, die erste Führungsschiene bildet den Spalt mit der Oberfläche der Aufnahmefläche aus.

Die Aufnahmefläche dient damit einerseits zum (Vor)sortieren der Vorformlinge, andererseits jedoch auch - bevorzugt mittels ihres Aussenumfangs - zum Stauen derselben. Vorzugsweise erfolgt das Stauen der Vorformlinge in einem losen Verbund. Die Aufnahmefläche ist bevorzugt horizontal angeordnet, kann aber auch einen gegenüber der Horizontalen von 0° verschiedene Winkel aufweisen, wobei dann vorteilhafter Weise eine Anstellung zwischen 5° und 30° durchgeführt wird.

Unter einer Führungsschiene wird eine beidseitig durch eine Wandung begrenzte Schiene verstanden, wobei zwischen diesen beiden Wandungen der Vorformling geführt werden kann. Der Grundkörper dieses Vorformlings, der üblicherweise einen geringeren Querschnitt aufweist als beispielsweise sein Mündungskragen, kann dabei durch diesen Spalt hindurchtreten und der Kragen wird an dem Spalt festgehalten. Auf diese Weise wird üblicherweise auch der Vorformling in eine vorbestimmte Position gebracht, da der Schwerpunkt des Vorformlings unterhalb des erwähnten Umfangskragens liegt. Insbesondere wird derjenige Teil des Stückguts ausgeschieden, der nicht ordnungsgemäß durch die Führungsschienen bzw. die Wendeeinrichtung geführt wird. Unter einer ordnungsgemäßen Führung in der ersten Führungsschiene wird bevorzugt verstanden, dass die Vorformlinge horizontal und im Wesentlichen in einer radialen Richtung ausgerichtet sind. Unter einer ordnungsgemäßen Führung in der zweiten Führungsschiene wird verstanden, dass die Vorformlinge in vertikaler Ausrichtung geführt werden.

Das Stückgut bzw. der Vorformling weist üblicherweise eine Längsrichtung auf, welche gleichzeitig bevorzugt auch eine Symmetrieachse des Vorformlings ist. Der Vorformling wird durch die Wendeeinrichtung derart geschwenkt, dass die Längsrichtung selbst um einen vorgegebenen Winkel, beispielsweise um 90°, geschwenkt wird. So ist es möglich, den Vorformling von einer liegenden Position in eine stehende Position überzuführen. Bevorzugt weist die Vorrichtung mehrere Ausscheideeinrichtungen auf, wobei jede dieser Ausscheideeinrichtungen in der Transportrichtung der Vorformlinge nach der Wendeeinrichtung angeordnet ist.

Im Stand der Technik werden, so weit überhaupt Ausscheideeinrichtungen vorgesehen sind, diese bereits vor der Wendeeinheit angeordnet. Weiterhin ist im Stand der Technik die Wendeeinheit als sogenannte geschlossene Einheit ausgeführt, das heißt, der Vorformling wird innerhalb derWendeeinheit bereits in einer exakten ordnungsgemäßen Position gegenüber der Führungsschiene geführt, wobei er diese Position auch nicht verlassen kann. Durch die erfindungsgemäße Anordnung der Wendeeinrichtung vor der Ausscheideeinrichtung kann die Wendeeinheit selbst frei, das heißt ohne ein Begrenzungselement gestaltet werden, welches einen Austritt des Stückguts aus der Führungsschiene heraus verhindert. Durch die folglich mögliche Ausgestaltung der Wendeeinrichtung kann ein höherer Durchsatz der Wendeeinrichtung erreicht werden, so dass im Bereich der Wendeeinrichtung, welche oft ein die Arbeitsgeschwindigkeit begrenzendes Element darstellt, eine höhere Betriebsgeschwindigkeit möglich ist.

Bei einer bevorzugten Ausführungsform schließt sich an die Wendeeinrichtung eine zweite Führungsschiene an, wobei die zweite Führungsschiene ebenfalls einen Spalt bildet, durch den ein Bereich des Stückguts hindurch tritt und durch den ein anderer Bereich des Stückguts gehalten wird. Vorzugsweise sind, wie oben erwähnt, die erste Führungsschiene und die zweite Führungsschiene derart gegeneinander verdreht, dass das Stückgut in der zweiten Führungsschiene in vertikaler Position befördert wird, wo hingegen es in der ersten Führungsschiene in einer horizontalen Position befördert wird. Vorteilhaft wird die zweite Führungsschiene mit einem Außenumfang der Aufnahmefläche gebildet.

Die gesamte Vorrichtung weist vorzugsweise einen modularen Aufbau auf. So können beispielsweise in einer Aufbewahrungseinheit die Vorvormlinge bevorratet und anschließend mit Hilfe einer ebenfalls als Modul gestalteten Fördereinheit auf die Aufnahmefläche transportiert werden.

Durch den modularen Aufbau können auch unterschiedliche Einheiten miteinander kombiniert werden.

Bei einer weiteren vorteilhaften Ausführungsform sind entlang der zweiten Führungsschiene Bewegungsförderungseinrichtungen vorgesehen, welche die Bewegung des Stückguts in der Bewegungsrichtung fördern. So ist es beispielsweise möglich, dass das Stückgut durch einen gerichteten Luftstrom befördert wird, wobei entsprechende Luftstromdüsen innerhalb des Bewegungspfades des Stückguts oder auch außerhalb desselben angeordnet sein können. Auch wäre es möglich, die Bewegung der Vorformlinge durch Bürsten, welche innen oder außen bezüglich des Bewegungspfades angeordnet sein können, oder auch durch innen oder außen angeordnete Mitnehmer zu fördern. Auch könnte der Rand der Aufnahmefläche, welche besonders bevorzugt als Scheibe ausgeführt ist, tribologisch in der Art ausgeführt werden, dass der Reibungskoeffizient zwischen dem Stückgut und der Aufnahmefläche erhöht wird, so dass die Bewegung beschleunigt wird.

Damit weist die erfindungsgemäße Vorrichtung einen Sortierbereich auf, in dem die Vorformlinge zunächst sortiert werden. Dieser Sortierbereich geht direkt in die Wendeeinrichtung über. Eine Ausscheidung nicht einsortierter Vorformlinge erfolgt erst im Bereich der zweiten Führungsschiene, welche sich an die Wendeeinrichtung anschließt ("Beruhigungsstrecke"). Dabei ist es möglich, dass ein oder mehrere Leitbleche vorgesehen werden, welche bis zu einem vorgegebenen Bereich der Aufnahmefläche bzw. nahe an diese heran geführt werden. An diese Leitbleche kann sich eine Staustrecke anschließen, innerhalb der beispielsweise über einen Niederhalter oberhalb der Mündung der Vorformlinge diese an einem Herausgleiten aus der Führungsschiene in ihrer Längsrichtung behindert werden.

Zusätzlich ist es möglich, dass im Inneren der Aufnahmefläche eine Vorsortierung der Vorformlinge, beispielsweise durch ein zweites kreisförmig angeordnetes Leitblech, vorgenommen wird.

Bei einer weiteren vorteilhaften Ausführungsform ist eine Förderungseinrichtung wie z.B. ein Transportband vorgesehen, welches die Vorformlinge der Aufnahmefläche zuführt. Dabei kann weiterhin ein Aufnahmebehältnis für die Vorformlinge vorgesehen sein, aus welchem heraus die Vorformlinge auf die Aufnahmefläche gefördert werden.

Bei einer weiteren vorteilhaften Ausführungsform wird der Spalt der zweiten Führungsschiene durch einen wenigstens abschnittsweise ringförmigen Körper gebildet, wobei wenigstens ein Abschnitt dieses ringförmigen Körpers in einer radial zu der Aufnahmefläche verlaufenden Richtung derart bewegbar ist, dass die Größe des Spalts vergrößert werden kann. In der erwähnten zweiten Führungsschiene kann es gelegentlich zu einer Verklemmung mehrerer Vorformlinge kommen. Durch das radiale Verschieben des besagten Abschnittes kann die Spaltgröße derart vergrößert werden, dass die eingeklemmten Vorformlinge nach unten herausfallen und damit aussortiert werden können. Hier ist nur eine konstruktive Möglichkeit der Vergrößerung des Spalts zum Zwecke der Aussortierung angegeben. Es sind aber selbstverständlich auch andere Lösungen denkbar. Sinn und Zweck ist es lediglich, dass die Spaltgröße vergrößert werden kann, damit Störungen behoben werden können, indem die sich in dem Bereich des veränderbaren Segments befindlichen Vorformlinge entfernt werden. Damit können durch dieses verfahrbare äußere Segment, insbesondere im Bereich des Beginns eines Niederhalters Störungen infolge vom Klemmen ohne Eingreifen des Bedieners automatisch behoben werden. Bevorzugt werden derartige Störungen über Lichtschranken oder ähnliche Sensoreinrichtungen abgefragt.

Vorteilhaft ist in wenigstens einem Abschnitt der zweiten Führungsschiene ein Niederhalteelement vorgesehen, welches verhindert, dass das Stückgut entlang seiner Längsrichtung aus der zweiten Führungsschiene heraus gleitet. In diesen Bereichen des Niederhalteelements wird damit das Stückgut in einer bestimmten Lage gegenüber der Führungsschiene gehalten und kann sich damit im Wesentlichen nur noch entlang dieser Führungsschiene bewegen. Vorzugsweise sind alle möglichen Störungen bereits vor diesem Niederhalteelement behoben, so dass unter das Niederhalteelement nur noch solches Stückgut gleitet, welches in vorbestimmter Weise in der zweiten Führungsschiene liegt.

Bei einer weiteren vorteilhaften Ausführungsform ist die Wendeeinrichtung ohne einen Niederhalter ausgeführt, das heißt in diesem Fall können auch noch nicht ordnungsgemäß eingeordnete Vorformlinge vorhanden sein.

Bei einer weiteren vorteilhaften Ausführungsform weist die Vorrichtung wenigstens eine Sensoreinrichtung auf, welche eine Position des Stückguts gegenüber wenigstens einer Führungsschiene erfasst. Durch diese Sensoreinrichtung können diverse Fehlanordnungen des Stückguts gegenüber der Führungsschiene erfasst werden, wie beispielsweise verkipptes Stückgut, ineinander geklemmte Stückgüter und dergleichen.

Bei einer weiteren bevorzugten Ausführungsform weist die Vorrichtung eine Zuführeinrichtung auf, um der Aufnahmefläche das Stückgut zuzuführen, wobei ein Endabschnitt dieser Zuführeinrichtung von der Aufnahmefläche um weniger als 300 mm, bevorzugt um weniger als 200 mm und besonders bevorzugt um weniger als 150 mm beabstandet ist. Damit wird das Stückgut, das heißt insbesondere die Vorformlinge auf die Aufnahmefläche in einem relativ geringen Abstand aufgebracht, wobei durch eine entsprechend geringe Fallhöhe auch der Sortiervorgang begünstigt werden kann. Bevorzugt werden die Vorformlinge der Aufnahmefläche in einer radialen Richtung derselben zugeführt. Besonders bevorzugt ist der Bereich der Zuführeinrichtung, in dem die Vorformlinge auf die Aufnahmefläche fallen, außerhalb des geometrischen Zentrums der Aufnahmefläche angeordnet und die Zuführrichtung verläuft wie oben erwähnt im Wesentlichen in radialer Richtung bezüglich der Aufnahmefläche.

Bei einer weiteren vorteilhaften Ausführungsform weist die Vorrichtung eine Ausblaseinrichtung auf, welche einen vorgegebenen Teil des Stückguts aus der zweiten Führungsschiene heraus bläst. Auch in diesem Fall kann mittels Sensoreinrichtungen festgestellt werden, dass bestimmtes Stückgut nicht ordnungsgemäß in der Schiene liegt oder dass beispielsweise zwei Vorformlinge miteinander verklemmt sind. In diesem Fall kann über die bevorzugt unterhalb der Führungsschiene angeordnete Ausblaseinrichtung derart fehlerhaft angeordnetes Stückgut nach oben aus der zweiten Führungsschiene herausgeblasen werden.

Die Ausblaseinrichtung wird vorzugsweise über Sensoreinrichtungen wie Lichtschranken und ein vorgeschaltetes Ventil aktiviert.

Bei einer weiteren vorteilhaften Ausführungsform ist die Drehgeschwindigkeit der drehbaren Aufnahmefläche regelbar. Auf diese Weise kann das Stauende des Stückguts im Bereich des oben erwähnten Niederhalteelementes durch eine Änderung der Drehzahl der Aufnahmefläche fixiert werden bzw. ist eine prinzipielle Steuerung dieses Stauendes durch Drehzahlkontrolle der Aufnahmefläche, gegebenenfalls auch mit einer entsprechenden Regelung eines Dosierbandantriebs, der das Stückgut auf die Aufnahmefläche fördert, möglich. Damit sind bevorzugt sowohl die Drehzahl der Aufnahmefläche als auch die Fördergeschwindigkeit des Beschickungssystems der Vorformlinge in die Steuerung mit eingebunden.

Die vorliegende Erfindung ist weiterhin auf eine Anlage zum Sortieren von Stückgut mit einer Vorrichtung der oben beschriebenen Art gerichtet sowie einem stromabwärts bezüglich der Bewegungsrichtung des Stückguts angeordneten Eintaktstern, der das Stückgut von der Vorrichtung übernimmt. Über diesen Eintaktstern kann das Stückgut vereinzelt an eine weitere Maschine, wie beispielsweise eine Blasmaschine, überführt werden.

Vorzugsweise ist zwischen der Vorrichtung und dem Eintaktstern ein angetriebenes Rad vorgesehen, welches das Stückgut wenigstens abschnittsweise bewegt. Dabei handelt es sich vorzugsweise um ein Staurad, welches die Eintaktung fördert. Vorzugsweise handelt es sich bei dem Eintaktstern um einen Sägezahnstern. Bei einer weiteren vorteilhaften Ausführungsform ist der Abstand zwischen dem Zentrum dieses Eintaktsterns und der Vorrichtung, das heißt deren Außenumfang, kleiner als 2000 mm und bevorzugt kleiner als 1500 mm. Damit befindet sich der erwähnt Eintaktstern in unmittelbarer Nähe zu der Aufnahmefläche.

Bei einer weiteren vorteilhaften Ausführungsform ist zwischen der Vorrichtung und dem Eintaktstern eine Übergabeschiene vorgesehen und an dieser Übergabeschiene eine Vielzahl von Luftaustrittsöffnungen, welche die Bewegung des Stückguts fördern. Über das erwähnte angetriebene Rad und / oder die Übergabeschiene kann ein Staudruck über einen Form- und/oder Reibschluss vor dem Eintaktstern erzeugt werden. Die erwähnte Übergabeschiene weist besonders bevorzugt Luftaustrittsöffnungen sowohl oberhalb als auch unterhalb des Tragrings der entsprechenden Vorformlinge auf. Dabei beträgt vorteilhaft der Abstand zwischen demjenigen Bereich, in dem der Eintaktstern in Eingriff mit den Vorformlingen kommt, und dem Ende des erwähnten Druckschachts bzw. dem Ende der letzten Luftaustrittsöffnungen weniger als 300 mm. Grundsätzlich ist es aber ausreichend, nur ein den Staudruck erzeugendes System vor dem Eintaktrad anzubringen.

Die vorliegende Erfindung ist weiterhin auf ein Verfahren zum Sortieren von Stückgut und insbesondere von Vorformlingen gerichtet, wobei das Stückgut auf eine drehbare Aufnahmefläche aufgebracht wird und von dort in eine erste Führungsschiene gelangt, die oberhalb der Aufnahmefläche angeordnet ist und zu der Aufnahmefläche einen Spalt bildet. Weiterhin wird das Stückgut mittels einer Wendeeinrichtung mit seiner Längsrichtung geschwenkt und es wird mittels einer Ausscheideeinrichtung ein Teil des sortierten Stückguts, der nicht in einer vorbestimmten Weise durch die Führungsschienen geführt wird, ausgeschieden. Erfindungsgemäß gelangt das Stückgut zunächst durch die Wendeeinrichtung und erst anschließend durch die Ausscheideeinrichtung. Damit wird auch bei dem erfindungsgemäßen Verfahren im Bereich der Wendeeinrichtung noch nicht sortiertes und damit auch zum Teil fehlgelagertes Stückgut gefördert. Durch das erfindungsgemäße Verfahren lassen sich höhere Arbeitsgeschwindigkeiten erzielen. Unter einer Schwenkung mit der Längsrichtung wird verstanden, dass das Stückgut in seiner Gesamtheit geschwenkt wird, so dass sich die Orientierung der Längsrichtung durch den Schwenkvorgang ändert.

Weitere Ausführungsformen und Vorteile ergeben sich aus den beigefügten Zeichnungen:
Darin zeigen:
   - Fig. 1: eine Draufsicht auf eine erfindungsgemäße Vorrichtung;
   - Fig. 2: eine Schrägansicht der Vorrichtung aus Fig. 1;
   - Fig. 3: eine Detailansicht eines Bereiches der Vorrichtung aus Fig. 1;
   - Fig. 4: eine weitere Detailansicht der Vorrichtung aus Fig. 1;
   - Fig. 5: eine Detailansicht der Vorrichtung aus Fig. 1;
   - Fig. 6: eine Detailansicht der Wendeeinrichtung;
   - Fig. 7: eine weitere Detailansicht der Wendeeinrichtung;
   - Fig. 8: eine Darstellung einer erfindungsgemäßen Anlage;
   - Fig. 9: eine Seitenansicht einer Übergabeschiene;
   - Fig. 10: eine weitere Detailansicht der Anlage aus Fig. 8;
   - Fig. 11: eine Seitenansicht einer Ausführungsform der Erfindung und
   - Fig. 12: eine Seitenansicht einer weiteren Ausführungsform der Erfindung.

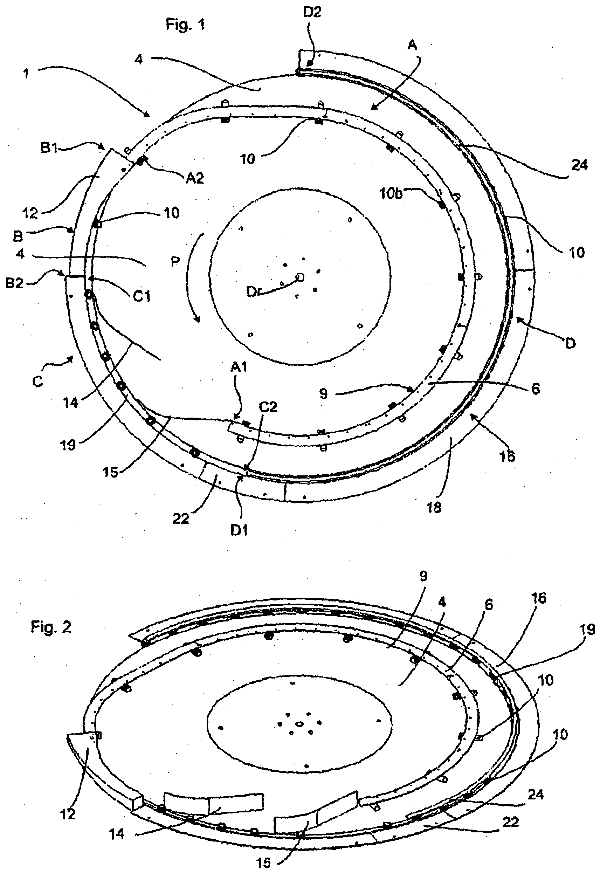

Fig. 1 zeigt eine Draufsicht auf eine erfindungsgemäße Vorrichtung 1 zum Sortieren von Stückgut 10. Diese Vorrichtung 1 weist eine drehbare Aufnahmefläche 4 bzw. Aufnahmescheibe für das Stückgut 10 auf. Bei der in Fig. 1 gezeigten Ausführungsform dreht sich im Betrieb diese Aufnahmefläche 4 entgegen dem Urzeigersinn, das heißt entlang des Pfeils P um die Drehachse Dr. Dabei ist es in einer bevorzugten Ausführungsform möglich, dass diese Aufnahmefläche 4 ein gewölbtes Profil aufweist, das heißt im Zentrum nach oben herausragt und zu den Rändern absinkt. Es wäre jedoch auch möglich, diese Aufnahmefläche 4 in einer anderen vorteilhaften Ausführungsform als ebene Fläche auszuführen. Ist die Aufnahmefläche 4 eben, so besteht eine bevorzugte Weiterbildung der Erfindung darin, sie horizontal anzuordnen, wobei eine Anstellung gegenüber der Horizontalen auch vorstellbar ist. Eine bevorzugte Anstellung liegt zwischen 5° und 30° gegenüber der Horizontalen.

Über eine (nicht gezeigte) Zuführeinrichtung werden der Aufnahmefläche 4 die Stückgüter 10, hier also die Vorformlinge, unsortiert zugeführt. Die Aufnahmefläche kann aus verschiedenen Materialien hergestellt sein, wie z.B. rostfreiem Stahl oder auch Legierungen oder sie kann eine Gleitbeschichtung aufweisen, wie z.B. eine Chromhaltige Gleitbeschichtung.
Durch die Zentrifugalkraft gelangen die Vorformlinge 10 zunächst zu einer ersten Führungsschiene 6, die hier stationär angeordnet ist und ein teilweise kreisförmiges Profil aufweist. Damit beginnt der eigentliche Sortiervorgang an dem mit dem Bezugszeichen A1 gekennzeichneten Anfangspunkt und endet an dem mit dem Bezugszeichen A2 gekennzeichneten Endpunkt. Der Bereich zwischen den Punkten A1 und A2 ist damit der Sortierbereich A. In Fig. 1 sind dabei bereits alle Vorformlinge 10 richtig gegenüber der ersten Führungsschiene 6 angeordnet. Diese Lage ergibt sich auch bevorzugt dadurch, dass die Vorformlinge einen Schwerpunkt aufweisen, der unterhalb des Gewindes 10b der Vorformlinge ist liegt und damit eine Ausrichtung in radialer Richtung in der in Fig. 1 gezeigten Art auftritt.

Gleichwohl wird eine erhebliche Anzahl der Vorformlinge auch am Endpunkt A2 in unsortierter Weise ankommen. So ist es möglich, das mehrere Vorformlinge ineinander stecken, oder dass die Vorformlinge noch nicht radial ausgerichtet sind oder seitlich gegenüber der ersten Führungsschiene 6 verkippt sind. Die erste Führungsschiene ist oberhalb der Aufnahmefläche 4 angeordnet und zwischen der Aufnahmefläche 4 und der ersten Führungsschiene 6 wird ein Spalt 9 ausgebildet.

An den Sortierbereich A schließt sich ein Wendebereich B an, in dem die Vorformlinge mit ihrer Längsrichtung gedreht werden. Der Anfangspunkt dieses Wendebereiches ist mit dem Bezugszeichen B1 und der Endpunkt mit dem Bezugszeichen B2 gekennzeichnet. Entsprechend bezeichnet das Bezugszeichen 12 die Wendeeinrichtung. An den Wendebereich B wiederum schließt sich eine Beruhigungsstrecke C an, wobei der Beginn dieser Beruhigungsstrecke mit dem Bezugszeichen C1 und das Ende der Beruhigungsstrecke mit dem Bezugszeichen C2 gekennzeichnet ist. In diesem Bereich C erfolgt auch die Ausscheidung nicht einsortierter Preforms 10. Dabei sind in Fig. 2 zwei Ausscheideeinrichtungen in Form von Ausscheideblechen 14, 15 gezeichnet, die fehl angeordnete Vorformlinge radial nach innen hin ausschleusen und damit wiederum der ersten Führungsschiene 6 bzw. dem Sortierbereich A zuführen. Diese Ausscheideeinrichtungen 14, 15 weisen dabei bevorzugt einen geradlinig verlaufenden Bereich und einen gekrümmten Bereich auf.

An den Ausscheidebereich bzw. die Beruhigungsstrecke C schließt sich eine Staustrecke D an, deren Beginn mit dem Bezugszeichen D1 und deren Ende mit dem Bezugszeichen D2 gekennzeichnet ist. Innerhalb dieser Staustrecke D sind die Vorformlinge 10 bereits sortiert und in der gewünschten Haltung hintereinander angeordnet. Am Ende der Staustrecke D, das heißt nach dem Punkt D2 werden die Vorformlinge 10 an den oben erwähnten Eintaktstern 34 übergeben.

Das Bezugszeichen 16 bezieht sich auf die zweite Führungsschiene, wobei diese zweite Führungsschiene einen Spalt 19 aufweist, der durch einen Ring 18 und den Außenumfang der Aufnahmefläche 4 gebildet wird. Das Bezugszeichen 22 bezieht sich auf ein Segment dieses Rings 18, welches radial nach außen bewegt werden kann.

Zwischen der Wendeeinrichtung 12 und dem Ausscheideelement 14 ist ein Spalt, durch den Vorformlinge 10 durch die Zentrifugalkraft nach außen von der Aufnahmefläche 4 treten können. Dieser Spalt ist in Fig. 1 relativ klein, er kann durch eine andere Anordnung der Ausscheideelemente 14, 15 größer oder kleiner ausgestaltet sein.

Fig. 2 zeigt eine Schrägansicht der in Fig. 1 gezeigten Vorrichtung. Man erkennt hier den Spalt 9, der zwischen der Aufnahmefläche 4 und der ersten Führungsschiene 6 gebildet wird. Dabei wird dieser Spalt 9 in einer bezüglich der Aufnahmefläche im Wesentlichen senkrecht stehenden Richtung gebildet.

Weiterhin ist auch der Spalt 19 zu erkennen, der durch die zweite Führungsschiene 16 gebildet wird. Daneben ist ein Niederhalteelement 24 vorgesehen, welches in einem Abschnitt zwischen den Punkten D1 und D2 der zweiten Führungsschiene 16 die einzelnen Behältnisse 10 niederhält. Neben den in Figur 2 gezeigten Ausscheideeinrichtungen 14 und 15 könnten auch mehrere Ausscheideeinrichtungen vorgesehen sein.

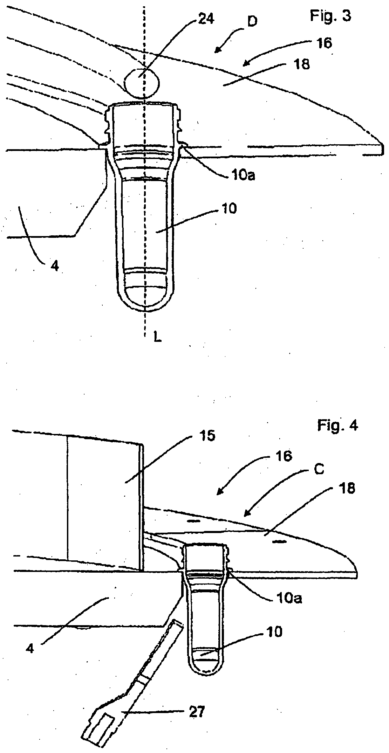

Fig. 3 zeigt eine Detailansicht der zweiten Führungsschiene 16 in dem Bereich D, in dem das Niederhalteelement 24 vorgesehen ist. Man erkennt, dass das Niederhalteelement 24 ebenfalls kreisringsegmentförmig ausgebildet ist und hier auch einen kreisförmigen Querschnitt aufweist. Das Niederhalteelement 24 ist oberhalb des Vorformlings 10 angeordnet und verhindert damit, dass dieser entlang seiner Längsrichtung L aus der Führungsschiene 16 herausgleiten kann. Man erkennt, dass sich der Vorformling mit seinem Tragring 10a einerseits gegenüber dem ringförmigen Segment 18 und andererseits gegenüber der Aufnahmefläche 4 abstützt und auf diese Weise geführt wird.

Fig. 4 zeigt eine weitere Detaildarstellung der erfindungsgemäßen Vorrichtung 1 in dem Bereich C. Genauer gesagt handelt es sich hier um einen Abschnitt in dem Bereich zwischen den Punkten C1 und C2 aus Fig. 1, das heißt einen Bereich, in dem das Niederhalteelement 24 noch nicht vorhanden ist. Das Bezugszeichen 27 bezieht sich auf eine unterhalb der Führungsschiene angeordnete Ausblaseinheit, welche geeignet ist, falsch liegende Vorformlinge 10 aus der Führungsschiene 16 herauszublasen. Durch die Anordnung der Ausblaseinrichtung 27 in einen Bereich, in dem auch die Ausscheideeinrichtung 15 angeordnet ist, wird erreicht, dass die Vorformlinge 10 nach radial außen bezüglich der Vorrichtung weggeschleudert werden können. Bevorzugt weist die Vorrichtung auch eine Sensoreinrichtung (nicht gezeigt) auf, die bezüglich bestimmter Vorformlinge 10 Fehlstellungen erkennt und an die Ausblaseinheit 27 das entsprechende Signal ausgibt, zumindest auch diesen fehlorientierten Vorformling 10 aus der Schiene 16 herauszublasen. Dabei ist, wie in Fig. 4 gezeigt, diese Ausblaseinrichtung 27 gegenüber der Ebene der Aufnahmefläche 4 geneigt, so dass der Vorformling 10 tendenziell radial nach außen geschleudert wird. Es wäre auch möglich, mehrere derartige Ausblaseinrichtungen 27 hintereinander vorzusehen.

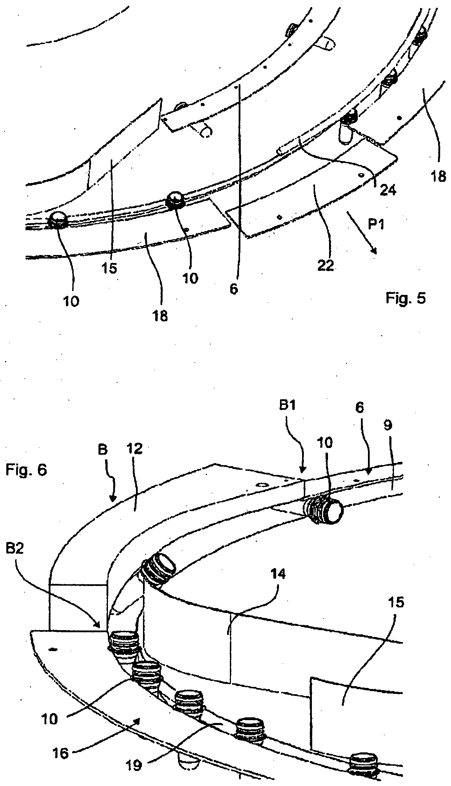

Fig. 5 zeigt eine weitere Detailansicht der erfindungsgemäßen Vorrichtung in dem Bereich C. Man erkennt, dass der Ring 18, der die zweite Aufnahmeschiene 16 bildet, ein Segment 22 aufweist, welches in radialer Richtung, das heißt entlang des Pfeils P1 nach außen geschoben werden kann. Während des Betriebs ist es möglich, dass es insbesondere vor dem Niederhalteelement 24 zu Stauungen oder Verklemmungen kommt. Um diese Verklemmungen zu beseitigen, wird das Segment 22 radial nach außen geschoben und sämtliche der in diesem Bereich gestauten Behältnisse 10 können nach unten aus der Führungsschiene 16 herausfallen. Damit bildet das Segment 22 ebenso wie die oben erwähnte Ausblaseinrichtung 27 eine Ausscheideeinrichtung. Das Segment 22 ist vorzugsweise in einem Übergangsbereich sowohl in Abschnitt C als auch in Abschnitt D angebracht.

Die Ausscheideeinrichtung 15 vor dem Bereich des Niederhalteelements 24 wird bevorzugt nahezu bis zur Oberfläche der Aufnahmefläche 4 geführt, um überschüssige oder nicht einsortierte Vorformlinge 10 nochmals der Sortierung zuführen zu können.

Fig. 6 zeigt den Bereich B einer erfindungsgemäßen Vorrichtung, genauer gesagt denjenigen Abschnitt, innerhalb dessen die Vorformlinge 10 gewendet werden. Man erkennt, dass die Vorformlinge 10 ausgehend von der ersten Führungsschiene 6 sich noch in einer waagrechten Position befinden, dann im Bereich der Wendeeinrichtung um ca. 90° gekippt werden und sich schließlich in der zweiten Führungsschiene 16 in vertikaler Position befinden. Die Wendeeinrichtung 12 weist, wie aus Fig. 6 ersichtlich, keinerlei Niederhalteelemente auf, so dass auch fehlorientierte Vorformlinge 10 durch sie hindurchtreten können.

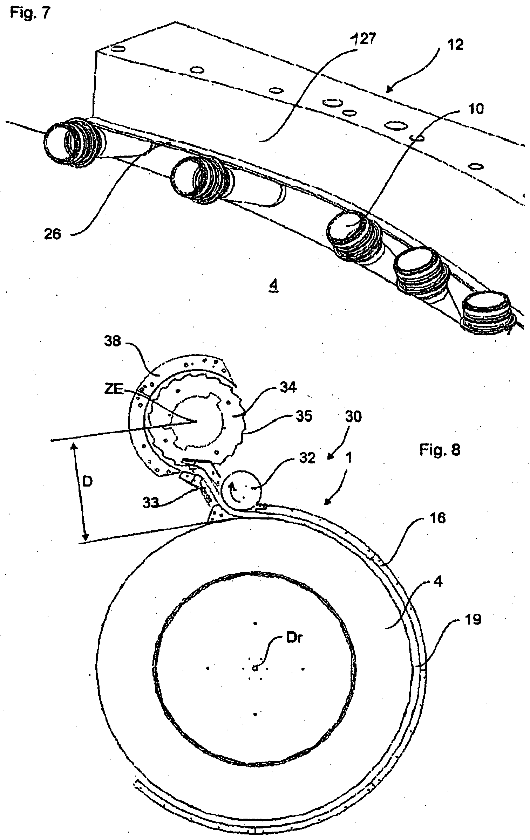

Fig. 7 zeigt eine detaillierte Darstellung der Wendeeinrichtung 12. Diese Wendeeinrichtung 12 weist einen Vorsprung 26 in Form eines ebenen Blechs auf, wobei dieser Vorsprung die radiale Kontur erzeugt, die zum Wenden der Behältnisse 10 verwendet wird. Weiterhin ist ein Aufnahmebereich 127 vorgesehen, der eine Kontur senkrecht zu der Oberfläche der Aufnahmefläche 4 erzeugt. Genauer gesagt gibt dieser Aufnahmebereich 127 die genaue Lage des Vorsprungs 26 gegenüber der Aufnahmefläche 4 vor, so dass er sich einerseits in Fig. 7 von rechts nach links hinsichtlich seiner Höhe anhebt und sich andererseits ebenfalls von rechts nach links auf die Aufnahmefläche 4 in radialer Richtung derselben zubewegt. Eine dreidimensionale Kontur des Vorsprungs 26 entsteht durch Befestigung des Vorsprungs bzw. ebenen Blechs 26 an dem Aufnahmebereich 127.

Durch den Vorsprung 26 wird ein besonders vorteilhaftes Führen der Vorformlinge 10 in der Wendeeinrichtung 12 erreicht.

Fig. 8 zeigt eine Draufsicht auf eine erfindungsgemäße Anlage 30. Dabei ist die Vorrichtung 1 nicht mehr im Detail dargestellt. An die Vorrichtung 1 schließt sich zunächst ein Scheibenrad 32 an, welches sich im Urzeigersinn dreht und auf diese Weise die Vorformlinge 10 in Richtung eines Eintaktsterns 34 fördert. Dieser Eintaktstern 34 nimmt die in seine Richtung geförderten Vorformlinge 10 vereinzelt auf und übergibt diese einem nachgeschalteten Modul, wie einer Blasmaschiene, einer Preforminnenreinigung, einer Inspektionseinrichtung oder dergleichen.

Der Abstand zwischen der Mitte ZE des Eintaktsterns 34 und dem Außenumfang der Aufnahmefläche 4 ist bevorzugt kleiner als 1500 mm, das heißt der Eintaktstern 34 ist in unmittelbarer Nähe zu der Aufnahmefläche 4 angeordnet.

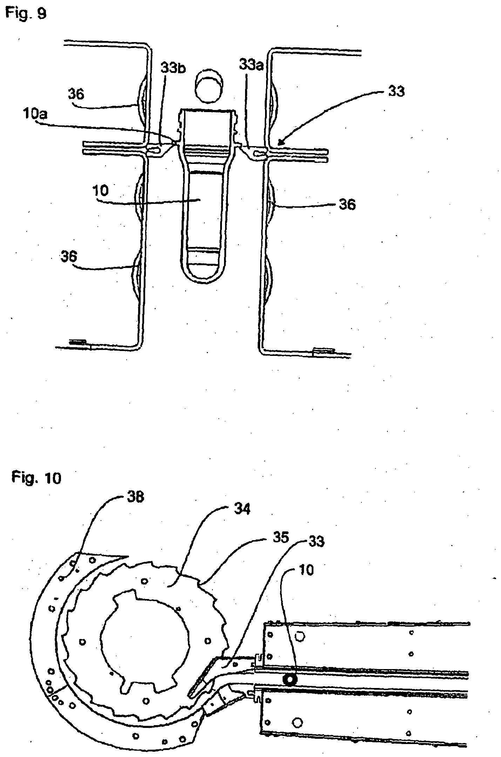

Zwischen dem angetriebenen Rad 32 und dem Eintaktstern 34 ist eine Führungsschiene 33 vorgesehen, die in Fig. 9 genauer dargestellt ist. Auch innerhalb dieser Führungsschiene 33 werden die Vorformlinge 10 durch zwei sich gegenüberliegende Vorsprünge 33a und 33b an ihrem Tragring 10a gefördert. Weiterhin sind innerhalb dieser Übergabeschiene 33 eine Vielzahl von Luftaustrittsöffnungen 36 vorgesehen, welche ebenfalls derart ausgerichtet sind, dass sie die Vorformlinge 10 in Richtung des Eintaktsterns fördern.

Fig. 10 zeigt eine weitere Detailansicht eines Übergabebereichs zu dem Eintaktstern 34. Man erkennt, dass der Eintaktstern 34 Ausnehmungen 35 aufweist, in welchen jeweils einzelne Vorformlinge einliegen können. Daneben ist ein Ringsegment 38 vorgesehen, das ebenfalls zur Abstützung der Vorformlinge 10 dient.

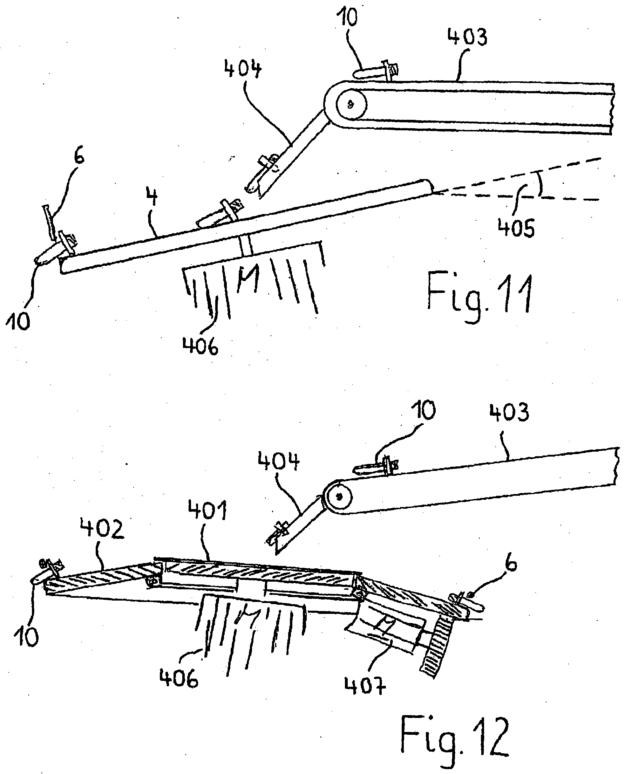

Fig. 11 zeigt eine andere Ausführungsform der Erfindung, bei der die Vorformlinge 10 auf einem Dosierband 403 zugeführt werden, das endlos umlaufend ausgeführt ist. Vom Dosierband 403 werden die Vorformlinge 10 zu einer Dosierschiene 404 gefördert, wo sie mittels Schwerkraft auf die Aufnahmefläche 4 gleiten. Die Aufnahmefläche 4 ist mit einer Antriebseinheit 406 ausgestattet und zu einer Horizontalen in einem Winkel 405 angestellt. Dieser Winkel beträgt zwischen 5° und 30°, vorzugsweise zwischen 20° und 25°. Der Vorteil dieser Anstellung gegenüber der Horizontalen ist eine positive Unterstützung des Sortiervorgangs durch einen Schwerkraftanteil, den die Vorformlinge 10 bei der Bewegung in Richtung der ersten Führungsschiene 6 erfahren.

Eine weitere Ausführungsform der Erfindung besteht darin, die Aufnahmefläche 4 zweiteilig auszugestalten, sodass ein Zentralbereich 401 in Form einer Scheibe und ein Außenbereich 401 in Form eines Ringes um den Zentralbereich 402 entsteht. Diese Ausgestaltung ist in eine Seitenansicht in Fig. 12 dargestellt, wobei hier die Vorformlinge 10 wieder mittels eines Dosierbandes 403 und einer Dosierschiene 404 zugeführt werden. Der Vorteil dieser Anordnung besteht in der besseren Steuerbarkeit des Sortiervorganges, da der Zentralbereich 401 und der Außenbereich 402 getrennt mit unterschiedlichen Geschwindigkeiten angetrieben werden können und somit die Sortiergeschwindigkeit bzw. die Sortierintensität gesteuert werden können. Die unterschiedliche Antreibbarkeit wird durch eine Antriebseinheit 406, die mit dem Zentralbereich 401 wirkverbunden ist, und einen Ringantrieb 407, der mit dem Außenbereich 402 wirkverbunden ist, sichergestellt. Ebenfalls Vorteilhaft ist es, wenn der Außenbereich 402 gegenüber der Horizontalen einen Anstellwinkel aufweist. Besonders Vorteilhaft ist die Kombination der unterschiedlichen Antreibbarkeit von Zentralbereich 401 und Außenbereich 402 und der Anstellung des Außenbereiches 402 gegenüber der Horizontalen.

## Patentansprüche

1. Vorrichtung (1) zum Sortieren von Vorformlingen(10), mit einer um ein vorgegebene Drehachse (D) drehbaren Aufnahmefläche (4) zur Aufnahme der Vorformlinge (10), mit einer ersten Führungsschiene (6) zur Führung der Vorformlinge (10), wobei die erste Führungsschiene (6) oberhalb der Aufnahmefläche (4) angeordnet ist und zu der Aufnahmefläche (4) einen Spalt (9) bildet, durch den ein Bereich des Vorformlings (10) hindurch tritt und durch den ein anderer Bereich (10a) des Vorformlings (10) gehalten wird, mit einer Wendeeinrichtung (12), welche die Vorformlinge (10) bezüglich einer Längsrichtung (L) der Vorformlinge (10) schwenkt und mit wenigstens einer Ausscheideeinrichtung (14, 15, 22, 27) welche einen Teil der sortierten Vorformlinge (10) ausscheidet,
**dadurch gekennzeichnet, dass**
die Wendeeinrichtung in der Bewegungsrichtung der Vorformlinge (10) strom-aufwärts bezüglich der Ausscheideeinrichtung (14, 15, 22, 27) angeordnet ist und geeiginet ist, den Vorformling von einer liegenden in eine stehende Position zu überführen.

2. Vorrichtung (1) nach Anspruch 1,
**dadurch gekennzeichnet, dass**
sich an die Wendeeinrichtung (12) eine zweite Führungsschiene (16) anschließt, wobei die zweite Führungsschiene einen Spalt (19) bildet, durch den ein Bereich (10a) des Vorformlings (10) hindurch tritt und durch den ein anderer Bereich des Vorformlings (10) gehalten wird.

3. Vorrichtung (1) nach Anspruch 2,
**dadurch gekennzeichnet, dass**
entlang der zweiten Führungsschiene Bewegungsförderungseinrichtungen vorgesehen sind, welche die Bewegung der Vorformlinge in der Bewegungsrichtung fördern.

4. Vorrichtung (1) nach wenigstens einem der vorangegangenen Ansprüche 2 - 3
**dadurch gekennzeichnet, dass**
der Spalt (19) der zweiten Führungsschiene (16) durch einen wenigstens abschnittsweise ringförmigen Körper (18) gebildet wird, wobei wenigstens ein Abschnitt (22) dieses ringförmigen Körpers (18) in einer radial zu der Aufnahmefläche (4) verlaufenden Richtung derart bewegbar ist, dass die Größe des Spalts (19) vergrößert werden kann.

5. Vorrichtung (1) nach wenigstens einem der vorangegangenen Ansprüche 2 - 4
**dadurch gekennzeichnet, dass**
in wenigstens einem Abschnitt der zweiten Führungsschiene (16) ein Niederhalterelement (24) vorgesehen ist, welches verhindert, dass das die Vorformlinge (10) entlang seiner Längsrichtung (L) aus der zweiten Führungsschiene (16) herausgleitet.

6. Vorrichtung nach wenigstens einem der vorangegangenen Ansprüche,
**dadurch gekennzeichnet, dass**
die Vorrichtung (1) wenigstens eine Sensoreinrichtung (25) aufweist, welche eine Position der Vorformlinge (10) gegenüber wenigstens einer Führungsschiene (6, 16) erfasst.

7. Vorrichtung (1) nach wenigstens einem der vorangegangenen Ansprüche,
**dadurch gekennzeichnet, dass**
die Vorrichtung (1) eine Zuführeinrichtung (20) aufweist, um der Aufnahmefläche (4) die Vorformlinge (10) zuzuführen und ein Endabschnitt (20a) dieser Zuführeinrichtung von der Aufnahmefläche um weniger als 300mm, bevorzugt um weniger als 200mm und besonders um weniger als 150mm beabstandet ist.

8. Vorrichtung (1) nach wenigstens einem der vorangegangenen Ansprüche,
**dadurch gekennzeichnet, dass**
die Drehgeschwindigkeit der drehbaren Aufnahmefläche (4) regelbar ist.

9. Vorrichtung (1) nach wenigstens einem der vorangegangenen Ansprüche,
**dadurch gekennzeichnet, dass**
die Aufnahmefläche (4) gegenüber der Horizontalen in einem Winkel angestellt ist, bevorzugt in einem Winkel zwischen 5° und 30°.

10. Vorrichtung nach wenigstens einem der vorangegangenen Ansprüche,
**dadurch gekennzeichnet, dass**
die Aufnahmefläche (4) zweiteilig ausgebildet ist, mit einem Zentralbereich (401) und einem Außenbereich (402), wobei die beiden Bereiche (401, 402) unabhängig voneinander antreibbar sind.

11. Vorrichtung (1) nach Anspruch 10,
**dadurch gekennzeichnet, dass**
der Zentralbereich (401) horizontal angeordnet ist, während der Außenbereich (402) gegenüber dem Zentralbereich (401) einen Anstellwinkel zwischen 5° und 30° aufweist.

12. Anlage (30) zum Sortieren von Vorformlingen (10) mit einer Vorrichtung (1) nach wenigstens einem der vorangegangenen Ansprüche sowie einen stromabwärts bezüglich der Bewegungsrichtung Vorformlinge (10) angeordneten Eintaktstern (34), der die Vorformlinge (10) von der Vorrichtung (1) übernimmt.

13. Anlage (30) nach Anspruch 12,
**dadurch gekennzeichnet, dass**
zwischen der Vorrichtung (1) und dem Eintaktstern (34) ein angetriebenes Rad (32) vorgesehen ist, welches die Vorformlinge (10) wenigstens abschnittsweise bewegt.

14. Anlage (30) nach Anspruch 12 oder 13
**dadurch gekennzeichnet, dass**
der Abstand zwischen dem Zentrum (ZE) des Eintaktsterns (34) und der Vorrichtung kleiner als 2000mm, und bevorzugt kleiner als 1500mm ist.

15. Verfahren zum Sortieren von Stückgut (10) und insbesondere von Vorformlingen (10) wobei das Stückgut (10) auf eine drehbare Aufnahmefläche (4) aufgebracht und von dort in eine erste Führungsschiene (6) gelangt, die oberhalb der Aufnahmefläche (4) angeordnet ist und zu der Aufnahmefläche (4) einen Spalt (9) bildet, mittels einer Wendeeinrichtung (12) mit seiner Längsrichtung (L) geschwenkt wird, und wobei mittels wenigstens einer Ausscheideeinrichtung (14, 15, 22, 27) ein Teil des sortierten Stückguts (10) ausgeschieden wird, **dadurch gekennzeichnet, dass**
das Stückgut (10) zunächst durch die Wendeeinrichtung (12) und anschließend zu der Ausscheideeinrichtung (14, 15, 22, 27) gelangt und wobei die Wendeeinrichtung die Vorformlinge (10) von einer liegenden in eine stehende Position überführt.

## Claims

1. Apparatus (1) for sorting preforms (10), comprising a receiving surface (4) which can rotate about a predefined rotation axis (D) and is designed to receive the preforms (10), comprising a first guide rail (6) for guiding the preforms (10), wherein the first guide rail (6) is arranged above the receiving surface (4) and forms a gap with respect to the receiving surface (4) through which one region of the preforms (10) passes and by means of which another region (10a) of the preforms (10) is held, comprising a turning device (12) which pivots the preforms (10) with respect to a longitudinal direction (L) of the preforms (10), and comprising at least one separating device (14, 15, 22, 27) which separates out some of the sorted preforms (10),
**characterised in that**
the turning device is arranged upstream of the separating device (14, 15, 22, 27) in the movement direction of the preforms (10), and is suitable for transferring the preform (10) from a lying position into an upright position.

2. Apparatus (1) according to claim 1,
**characterised in that**
the turning device (12) is adjoined by a second guide rail (16), wherein the second guide rail forms a gap (19) through which one region (10a) of the preform (10) passes and by means of which another region of the preform (10) is held.

3. Apparatus (1) according to claim 2,
**characterised in that**
movement-promoting devices are provided along the second guide rail and promote the movement of the preforms in the movement direction.

4. Apparatus (1) according to at least one of the preceding claims 2 - 3,
**characterised in that**
the gap (19) of the second guide rail (16) is formed by an at least partially annular body (18), wherein at least one section (22) of this annular body (18) can be moved in a direction running radially with respect to the receiving surface (4) such that the size of the gap (19) can be enlarged.

5. Apparatus (1) according to at least one of the preceding claims 2 - 4, **characterised in that**
a holding-down element (24) is provided in at least one section of the second guide rail (16) and prevents the preforms (10) from sliding out of the second guide rail (16) in their longitudinal direction (L).

6. Apparatus (1) according to at least one of the preceding claims,
**characterised in that**
the apparatus (1) comprises at least one sensor device (25) which detects a position of the preforms (10) with respect to at least one guide rail (6, 16).

7. Apparatus (1) according to at least one of the preceding claims,
**characterised in that**
the apparatus (1) comprises a feed device (20) for feeding the preforms (10) to the receiving surface (4), and an end section (20a) of this feed device is spaced apart from the receiving surface by less than 300 mm, preferably by less than 200 mm and in particular by less than 150 mm.

8. Apparatus (1) according to at least one of the preceding claims,
**characterised in that**
the speed of rotation of the rotatable receiving surface (4) can be adjusted.

9. Apparatus (1) according to at least one of the preceding claims,
**characterised in that**
the receiving surface (4) is arranged at an angle with respect to the horizontal, preferably at an angle of between 5° and 30°.

10. Apparatus according to at least one of the preceding claims,
**characterised in that**
the receiving surface (4) is configured in two parts, with a central region (401) and an outer region (402), wherein the two regions (401, 402) can be driven independently of one another.

11. Apparatus (1) according to claim 10,
**characterised in that**
the central region (401) is arranged horizontally, while the outer region (402) is arranged at an angle of between 5° and 30° with respect to the central region (401).

12. Installation (30) for sorting preforms (10), comprising an apparatus (1) according to at least one of the preceding claims and also a synchronisation star wheel (34) which is arranged downstream with respect to the movement direction of the preforms (10) and which picks up the preforms (10) from the apparatus (1).

13. Installation (30) according to claim 12,
**characterised in that**
a driven wheel (32) is provided between the apparatus (1) and the synchronisation star wheel (34) and moves the preforms (10) at least partially.

14. Installation (30) according to at least one of the preceding claims 12 or 13, **characterised in that**
the distance between the centre (ZE) of the synchronisation star wheel (34) and the apparatus is less than 2000 mm and preferably less than 1500 mm.

15. Method for sorting piece goods (10) and in particular preforms (10), wherein the piece good (10) is placed on a rotatable receiving surface (4) and from there pass into a first guide rail (6) which is arranged above the receiving surface (4) and which forms a gap (9) with respect to the receiving surface (4) and are pivoted about their longitudinal direction (L) by means of a turning device (12), and wherein some of the sorted piece goods (10) are separated out by means of at least one separating device (14, 15, 22, 27),
**characterised in that**
the piece goods (10) pass firstly through the turning device (12) and then to the separating device (14, 15, 22, 17), and wherein the turning device transfers the preforms (10) from a lying position into an upright position.

## Revendications

1. Appareil (1) pour le tri de préformes (10), avec une surface de réception (4) rotative autour d'un axe de rotation (D) donné et destinée à recevoir les préformes (10), avec un premier rail de guidage (6) destiné à guider les préformes (10), ledit premier rail de guidage (6) étant disposé au-dessus de la surface de réception (4) et formant un interstice (9) entre lui et la surface de réception (4), au travers duquel passe une partie de la préforme produit (10) et par lequel une autre partie (10a) de la préforme (10) est retenue, avec un dispositif de pivotement (12) qui pivote les préformes (10) par rapport à une direction longitudinale (L) des préformes (10), et avec au moins un dispositif de séparation (14, 15, 22, 27) qui sépare une fraction des préformes triées (10),
**caractérisé**
**en ce que** le dispositif de pivotement est disposé en amont par rapport au dispositif de séparation (14, 15, 22, 27) dans la direction de déplacement des préformes (10) et est apte pour transférer la préforme d'une position gisante en une position verticale.

2. Appareil (1) selon la revendication 1,
**caractérisé**
**en ce que** le dispositif de pivotement (12) se prolonge par un deuxième rail de guidage (16), ledit deuxième rail de guidage formant un interstice (19) au travers duquel passe une partie (10a) de la préforme (10) et par lequel une autre partie de la préforme (10) est retenue.

3. Appareil (1) selon la revendication 2,
**caractérisé**
**en ce que** des dispositifs d'aide au transport sont prévus le long du deuxième rail de guidage, lesquels assistent le transport des préformes dans la direction de déplacement.

4. Appareil (1) selon au moins une des revendications 2 et 3,
**caractérisé**
**en ce que** l'interstice (19) du deuxième rail de guidage (16) est formé par un corps (18) au moins partiellement annulaire, au moins un tronçon (22) de ce corps annulaire (18) étant déplaçable dans une direction s'étendant radialement par rapport à la surface de réception (4), de telle manière que la taille de l'interstice (19) puisse s'agrandir.

5. Appareil (1) selon au moins une des revendications 2 à 4,
**caractérisé**
**en ce qu'**un élément de maintien (24) est prévu sur au moins un tronçon du deuxième rail de guidage (16), lequel empêche que les préformes (10) se dégage du deuxième rail de guidage (16) en glissant dans sa direction longitudinale (L).

6. Appareil selon au moins une des revendications précédentes,
**caractérisé**
**en ce que** ledit appareil (1) comprend au moins un dispositif à capteur (25) qui détecte une position des préformes (10) par rapport à au moins un rail de guidage (6, 16).

7. Appareil (1) selon au moins une des revendications précédentes,
**caractérisé**
**en ce que** ledit appareil (1) comporte un dispositif d'amenée (20) pour conduire les préformes (10) vers la surface de réception (4), et en ce qu'une partie d'extrémité (20a) de ce dispositif d'amenée est espacée de moins de 300 mm, avantageusement de moins de 200 mm et préférentiellement de moins de 150 mm de la surface de réception.

8. Appareil (1) selon au moins une des revendications précédentes,
**caractérisé**
**en ce que** la vitesse de rotation de la surface de réception rotative (4) est réglable.

9. Appareil (1) selon au moins une des revendications précédentes,
**caractérisé**
**en ce que** la surface de réception (4) est disposée avec un angle d'inclinaison de préférence compris entre 5° et 30° par rapport à l'horizontale.

10. Appareil selon au moins une des revendications précédentes,
**caractérisé**
**en ce que** la surface de réception (4) est réalisée en deux parties, avec une partie centrale (401) et une partie extérieure (402), les deux parties (401, 402) étant entraînables l'une indépendamment de l'autre.

11. Appareil (1) selon la revendication 10,
**caractérisé**
**en ce que** la partie centrale (401) est disposée horizontalement, alors que la partie extérieure (402) présente un angle d'inclinaison compris entre 5° et 30° par rapport à la partie centrale (401).

12. Installation (30) pour le tri de préformes (10) comportant un appareil (1) selon au moins une des revendications précédentes, ainsi qu'une étoile d'admission (34) disposée en aval par rapport à la direction de déplacement des préformes (10), laquelle reprend les préformes (10) de l'appareil (1).

13. Installation (30) selon la revendication 12,
**caractérisé**
**en ce qu'**une roue entraînée (32) est prévue entre l'appareil (1) et l'étoile d'admission (34), laquelle déplace au moins partiellement les préformes (10).

14. Installation (30) selon la revendication 12 ou 13,
**caractérisé**
**en ce que** l'espacement entre le centre (ZE) de l'étoile d'admission (34) et l'appareil est inférieur à 2000 mm, de préférence à 1500 mm.

15. Procédé de tri de produits (10) et en particulier de préformes (10), dans lequel les produits (10) sont disposés sur une surface de réception rotative (4), parviennent de là sur un premier rail de guidage (6) disposé au-dessus de la surface de réception (4) et formant un interstice (9) entre lui et la surface de réception (4), et sont pivotés par rapport à leur direction longitudinale (L) au moyen d'un dispositif de pivotement (12), et dans lequel une fraction des produits (10) triés est séparée au moyen d'au moins un dispositif de séparation (14, 15, 22, 27),
**caractérisé**
**en ce que** les produits (10) passent par le dispositif de pivotement (12) avant de parvenir au dispositif de séparation (14, 15, 22, 27) et en ce que le dispositif de pivotement (12) transfère les préformes (10) d'une position gisante en une position verticale.
